# EUROPÄISCHE PATENTANMELDUNG

(11) **EP 1 170 711 A1**
(43) Veröffentlichungstag der Anmeldung: **09.01.2002**
(21) Anmeldenummer: 01115246.9
(22) Anmeldetag: 23.06.2001
(51) Int. Cl.: G08B 21/00, B60R 25/10

(54) **Ortungsgerät für eine Kraftfahrzeugfernbedienung**

(30) Priorität: 05.07.2000 DE 10032750
(71) Anmelder: ADAM OPEL AG, 65423 Rüsselsheim (DE)
(72) Erfinder: Saucke, Wolfgang, Dipl.-Ing., 64521 Gross-Gerau (DE)

(57) **Zusammenfassung**

Eine Fernbedienung (6) für ein von dieser beeinflussbares Gerät (1), welches einen Sender (3) aufweist, umfasst einen Empfänger (6) sowie eine Schallquelle (8). Bei einer aktiven Handlung des Benutzers am von der Fernbedienung (6) beeinflussbaren Gerät (1) zum Zwecke der Lokalisierung der Fernbedienung (6) ist für eine bestimmte Zeitdauer die Schallquelle (8) der Fernbedienung (6) aktivierbar. Dadurch kann diese schnell und sicher lokalisiert werden.

## Beschreibung

Die Erfindung betrifft eine Fernbedienung für ein von dieser beeinflussbares Gerät, welches einen Sender aufweist, mit einem Empfänger sowie einer Schallquelle in der Fernbedienung.

Bei einer Vielzahl von Gebrauchsgeräten werden Fernbedienungen benutzt, um die Geräte beabstandet von deren Aufstellort aktivieren bzw. bedienen zu können. Beispielsweise im Bereich der Heimelektronik werden Fernbedienungen für Fernsehgeräte, Videogeräte, Compaktdisc-Geräte und dergleichen, aber auch für Mikrowellengeräte, Küchenherde usw. verwendet. Durch Betätigung der Fernbedienung können eine Reihe von Funktionen am jeweiligen Gerät ausgeführt oder Schaltzustände herbeigeführt werden.

Darüber hinaus ist es üblich, Kraftfahrzeugen eine Fernbedienung bzw. einen elektronischen Schlüssel zuzuordnen. Durch die Fernbedienung bzw. den elektronischen Schlüssel können die Diebstahlwarnanlage ein- und ausgeschaltet, die Fahrzeugtüren geöffnet und verschlossen, der Kofferraum ver- oder entriegelt, die Wegfahrsperre aktiviert oder deaktiviert, das Fahrzeug gestartet oder andere Funktionen am Kraftfahrzeug ausgelöst werden.

Aus der DE 44 27 023 C2 ist ein Diebstahlschutzsystem für ein Kraftfahrzeug mit einer tragbaren Fernbedienung bekannt, die einen Sender aufweist, der ein Codesignal zu einem Empfänger im Fahrzeug sendet, wodurch die Diebstahlwarnanlage ein- oder ausgeschaltet wird. Weiterhin ist im Kraftfahrzeug eine Sendeeinheit und in der Fernbedienung ein Empfänger angeordnet. Im Falle eines Einbruchs oder Diebstahls wird vom Sender des Kraftfahrzeuges ein Signal an die Fernbedienung gesendet. Ein akustisches Anzeigeelement der Fernbedienung signalisiert dem Benutzer der Fernbedienung die unerlaubte Handlung eines Unbefugten am Kraftfahrzeug.

Die DE 197 45 617 A1 offenbart ein Kraftfahrzeug mit einem mittels einer Fernbedienung zu öffnenden oder zu verriegelnden Schließsystem. Im Fahrzeug befindet sich eine akustische Rückmeldeeinrichtung, die ein Mikrofon, eine Signalaufbereitung, einen Verstärker, einen Gleichrichter, eine Verstärkungsregelung und einen Signalgeber aufweist, wobei die Verstärkungsregelung mit einem Tongenerator in Verbindung steht. Dadurch lässt sich der Schallpegel der akustischen Rückmeldeeinrichtung um einen vorgegebenen Betrag über die aktuelle Umgebungslautstärke legen. Das Tonsignal kann unterschiedliche Informationen, z. B. lediglich die Verriegelung der Türen oder die Aktivierung der Diebstahlsicherung signalisieren. An der Fernbedienung selbst befindet sich kein akustisches Signalelement.

Des Weiteren ist aus der DE 196 07 117 A1 eine Einrichtung zur Kontrolle des Türverschlusses, insbesondere an einem Kraftfahrzeug bekannt. Der elektronische Schlüssel weist einen Sender auf, welcher mit einem am Fahrzeug angeordneten Empfänger innerhalb eines definierten räumlichen Bereiches in Kommunikationsverbindung steht, wobei am elektronischen Schlüssel eine Signaleinrichtung vorgesehen ist. Ferner weist der elektronische Schlüssel zusätzlich einen Empfänger und das Kraftfahrzeug weiterhin einen mit diesem in Kommunikationsverbindung stehenden Sender auf. Die Signaleinrichtung am elektronischen Schlüssel umfasst ein akustisches Wiedergabeelement zur Tasten gesteuerten Signalisierung des Öffnungs- bzw. Schließzustandes der Türen des Kraftfahrzeuges.

Besonders bei Kraftfahrzeugen sind die Fernbedienungen bzw. elektronischen Schlüssel als passive Zugangs- bzw. Startsysteme ausgebildet und beruhen auf der Erkennung der Fernbedienung bzw. des elektronischen Schlüssels in bestimmten Erfassungsbereichen des Fahrzeuges. Besonders vorteilhaft hierbei ist, dass die Fernbedienung bzw. der elektronische Schlüssel nicht mehr aktiv bedient werden muss. Während bei früheren Fernbedienungen für die Entriegelung der Türen des Fahrzeuges eine Entriegelungstaste bedient werden musste, kann bei passiven Zugangs- bzw. Startsystemen das Fahrzeug ohne aktive Bedienung des elektronischen Schlüssels, nämlich durch einfaches Ziehen des Türgriffes geöffnet werden. Somit reicht das Tragen des elektronischen Schlüssels, der gleichzeitig auch Identifikationsgeber ist, am Körper oder beispielsweise in der Aktentasche des Benutzers des Fahrzeuges für eine Fahrzeugöffnung und/oder einen Motorstart aus.

Beim Fahrzeugbenutzer stellt sich allerdings erfahrungsgemäß das Gefühl einer gewissen Unsicherheit ein, da er häufig nicht weiß, wo genau er den elektronischen Schlüssel abgelegt oder verwahrt hat, da die Ablagemöglichkeiten sehr vielfältig sind, z. B. in einer Jackentasche, einem Aktenkoffern, in den Hosentaschen, die Innentaschen von Jacketts usw.

Der Erfindung liegt die Aufgabe zu Grunde, eine Fernbedienung für ein von dieser beeinflussbares Gerät derart auszubilden, dass diese schnell und sicher aufgefunden werden kann.

Die Aufgabe wird erfindungsgemäß dadurch gelöst, dass bei einer aktiven Handlung des Benutzers am von der Fernbedienung beeinflussbaren Gerät zum Zwecke der Lokalisierung der Fernbedienung für eine bestimmte Zeitdauer die Schallquelle der Fernbedienung aktivierbar ist. Die Ausführung einer aktiven Handlung des Benutzers am entsprechenden Gerät führt demnach zu einer Aktivierung eines im Gerät befindlichen Senders. Dieser sendet ein Signal an den an der Fernbedienung vorhandenen Empfänger. Dieser wiederum bewirkt eine Aktivierung der in der Fernbedienung befindlichen Schallquelle für einen definierten Zeitraum. Das von der Fernbedienung abgegebene akustische Signal signalisiert dem Benutzer den genauen Ablage- bzw. Aufbewahrungsort der Fernbedienung. Dem Benutzer wird dadurch nicht mehr das Unsicherheitsgefühl vermittelt, wo er die Fernbedienung abgelegt oder hingesteckt hat.

Nach einer bevorzugten Ausgestaltung der Erfindung sind der Empfänger und die Schallquelle als elektronischer Baustein in der Fernbedienung ausgebildet. Ein solcher elektronischer Baustein gewährleistet eine kompakte Bauweise der Fernbedienung.

Die aktive Handlung des Benutzers des von der Fernbedienung beeinflussbaren Gerätes kann insbesondere in der Betätigung eines Bedienelementes, der Öffnung einer Tür oder eines Gehäuses des Gerätes bzw. eines Teils davon oder dergleichen bestehen. Beispielsweise bei elektronischen Unterhaltungsgeräten kann die Berührung oder Betätigung etwa der Ein- und/oder Aus-Taste die Auslösung der Schallquelle an der Fernbedienung bewirken. An größeren Geräten, wie beispielsweise Musikanlagen, kann eine gesonderte, gegebenenfalls auffällige Taste vorgesehen werden, die allein dem Zweck dient, durch deren Betätigung die Schallquelle der Fernbedienung zu aktivieren und somit die Fernbedienung zu lokalisieren. Die Stärke des vom jeweiligen Gerät ausgesendeten Signals zur Aktivierung der Schallquelle an der Fernbedienung ist selbstverständlich umso größer, je größer deren Aktionsbereich bestimmt wird.

Eine bevorzugte Anwendungsmöglichkeit der erfindungsgemäßen Fernbedienung besteht darin, dass diese Bestandteil eines elektronischen Schlüssels und das von der Fernbedienung beeinflussbare Gerät ein Kraftfahrzeug ist. Da der elektronische Schlüssel beim Verlassen des Fahrzeuges vom Benutzer häufig verlegt wird, insbesondere durch Unachtsamkeit, durch Wechsel der Bekleidung, durch Wechsel der mitgeführten Tasche usw., ist es möglich, den Aufbewahrungsort des elektronischen Schlüssels leicht zu lokalisieren. Wird der elektronische Schlüssel in irgendeiner Form am Körper bzw. in der Nähe des Körpers des Benutzers aufbewahrt, z. B. in einer Jackentasche, muss der Benutzer nicht mehr nach dem elektronische Schlüssel suchen. Betätigt er beispielsweise den Türgriff einer Tür des Kraftfahrzeuges oder eine bestimmte, an der Außenseite der Karosserie des Fahrzeuges angebrachte Taste oder irgendein Schaltelement am Lenkstockschalter oder dergleichen, wird der im Kraftfahrzeug angebrachte Sender aktiviert, der ein Signal an den elektronischen Schlüssel sendet, der wiederum die Schallquelle am elektronischen Schlüssel aktiviert. Damit erkennt der Benutzer sofort den Aufbewahrungsort des elektronischen Schlüssels.

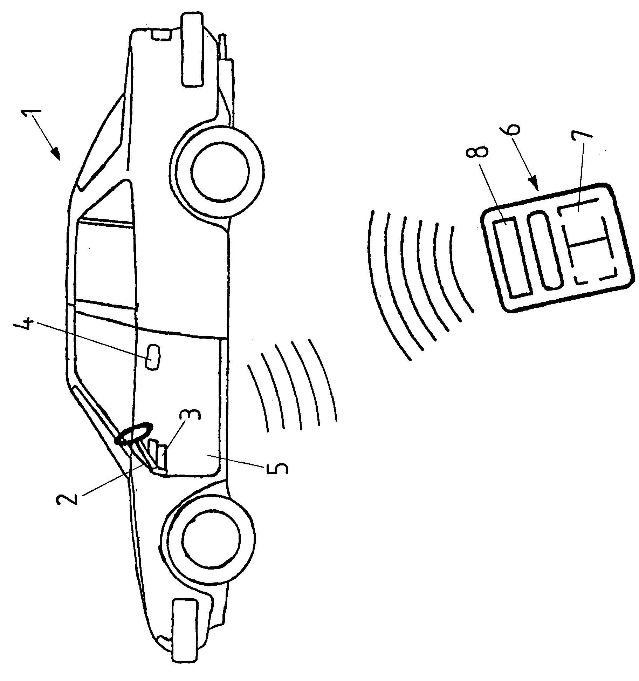

Der der Erfindung zugrunde liegende Gedanke wird in der nachfolgenden Beschreibung anhand eines Ausführungsbeispieles, das in der Zeichnung dargestellt ist, näher beschrieben. Die Zeichnungsfigur zeigt ein Kraftfahrzeug mit einer zugehörigen erfindungsgemäßen Fernbedienung.

Im Inneren des Kraftfahrzeuges 1 befindet sich in der Nähe des Lenkstockes 2 ein Sender 3. Ein Türgriff 4 (oder ein separater Taster im Türgriffbereich), vorzugsweise der Fahrertür 5, ist durch eine nicht gezeigte Leitung mit dem Sender 3 am Lenkstock 2 verbunden.

Weiterhin gehört zum Kraftfahrzeug 1 eine tragbare Fernbedienung 6, die in der Zeichnung im Verhältnis zum Kraftfahrzeug 1 stark vergrößert dargestellt ist. In der Fernbedienung 6 ist ein Empfänger untergebracht, der gemeinsam mit einer Schallquelle 8 in der Fernbedienung 6 einen elektronischen Baustein bildet.

Die Fernbedienung 6 kann vom Benutzer des Kraftfahrzeuges 1 in einer Tasche eines Kleidungsstückes oder in einer mitgeführten Aktentasche aufbewahrt werden. Ist dem Benutzer nicht bewusst, wo er die Fernbedienung 6 aufbewahrt, kann er einfach den Türgriff 4 der Tür 5 des Kraftfahrzeuges 1 zum Öffnen betätigen. Dadurch sendet der im Innern des Kraftfahrzeuges 1 befindliche Sender 3 ein Signal zur Fernbedienung 6, beispielsweise in der Aktentasche des Benutzers. Der Empfänger 7 in der Fernbedienung 6 empfängt das vom Sender 3 im Kraftfahrzeug 1 ausgesendete Signal und aktiviert die Schallquelle 8 in der Fernbedienung 6. Die Schallquelle 8 erzeugt für einen kurzen Zeitraum einen bestimmten Ton oder eine Tonfolge, so dass der Benutzer des Kraftfahrzeuges 1 sofort den Aufbewahrungsort der Fernbedienung 6 bestimmen kann. Die Fernbedienung 6 selbst kann Bestandteil eines elektronischen Schlüssels für das Kraftfahrzeug 1 sein. Anstelle einer normalen Türgriffbetätigung kann auch eine Betätigung des Türgriffes 4 (oder des separaten Tasters) für eine bestimmte Zeit vorgesehen werden, um das akustische Signal auszulösen. So sind ungewollte Signale vermeidbar.

## Patentansprüche

1. Fernbedienung für ein von dieser beeinflussbares Gerät, welches einen Sender aufweist, mit einem Empfänger sowie einer Schallquelle in der Fernbedienung, **dadurch gekennzeichnet, dass** bei einer aktiven Handlung des Benutzers am von der Fernbedienung (6) beeinflussbaren Gerät (1) zum Zwecke der Lokalisierung der Fernbedienung (6) für eine bestimmte Zeitdauer die Schallquelle (8) der Fernbedienung (6) aktivierbar ist.

2. Fernbedienung nach Anspruch 1, **dadurch gekennzeichnet, dass** der Empfänger (7) und die Schallquelle (8) als elektronischer Baustein in der Fernbedienung (6) ausgebildet sind.

3. Fernbedienung nach Anspruch 1 und 2, **dadurch gekennzeichnet, dass** die aktive Handlung des Benutzers des von der Fernbedienung (6) beeinflussbaren Gerätes (1) insbesondere in der Betätigung eines Bedienelementes (4), der Öffnung einer Tür (5) oder eines Gehäuses des Gerätes (1) bzw. eines Teils davon oder dergleichen besteht.

4. Fernbedienung nach den Ansprüchen 1 bis 3, **dadurch gekennzeichnet, dass** diese Bestandteil eines elektronischen Schlüssels und das von der Fernbedienung (6) beeinflussbare Gerät ein Kraftfahrzeug (1) ist.
